# EUROPÄISCHE PATENTSCHRIFT

(11) **EP 0 958 332 B1**
(45) Veröffentlichungstag und Bekanntmachung des Hinweises auf die Patenterteilung: **01.08.2001**
(21) Anmeldenummer: 97923763.3
(22) Anmeldetag: 28.04.1997
(51) Int. Cl.: C10J 3/54, C10J 3/56, C02F 11/12

(54) **VERFAHREN UND VORRICHTUNG ZUM VERARBEITEN VON BIOLOGISCHEN RESTSTOFFEN, INSBESONDERE KLÄRSCHLAMM**
PROCESS AND DEVICE FOR PROCESSING OF BIOLOGICAL RESIDUAL MATERIAL, IN PARTICULAR SLUDGE
PROCEDE ET DISPOSITIF POUR LE TRAITEMENT DE MATERIAUX RESIDUAIRES BIOLOGIQUES, NOTAMMENT DE BOUES DE CURAGE

(30) Priorität: 30.04.1996 DE 19617218
(43) Veröffentlichungstag der Anmeldung: 24.11.1999
(73) Patentinhaber: Eder, Christian, 66539 Neunkirchen (DE); WIED, Erwin, F-57250 Alsting (FR)
(72) Erfinder: Eder, Christian, 66539 Neunkirchen (DE); WIED, Erwin, F-57250 Alsting (FR)
(74) Vertreter: Vièl, Christof, Dipl.-Ing.
(86) Internationale Anmeldenummer: DE9700869
(87) Internationale Veröffentlichungsnummer: WO9741193

(56) Entgegenhaltungen:
- EP-A- 0 166 079
- EP-A- 0 324 957
- WO-A-93/23500
- DE-A- 3 912 586
- GB-A- 2 185 970
- NL-A- 8 801 708

## Beschreibung

Die Erfindung betrifft ein Verfahren und eine Vorrichtung zum Verarbeiten von biologischen Reststoffen, insbesondere Klärschlamm.

Überschußschlamm aus Kläranlagen wird heute in der Regel mittels Zentrifugen entwässert. Trotz vieler Verbesserungsansätze wie dem Einsatz mehrstufiger Zentrifugen oder von Sonderkonstruktionen sind die Entwässerungsergebnisse dieser Einrichtungen für eine langfristige und sichere Entsorgung von Klärschlamm mit teilweise hohen biologischen Anteilen unbefriedigend. Die Zumischung von Stabilisaten wie Kalk oder Flugasche bringen keine Lösung, sondern erhöhen nur die zu entsorgende Abfallmenge und belasten eine Deponie zusätzlich.

Auch die Umsetzungsraten biologischer Anteile des Klärschlamms in Faulgas, wie sie in dem biologischen Teil einer Kläranlage nachgeschalteten Faultürmen erfolgt, sind unbefriedigend. Zudem erschweren in dem Faulgas enthaltende Bestandteile die Stromerzeugung. Die Faultürme werden jedoch benötigt, wenn der Klärschlamm für lange Entsorgungswege hygienisiert werden muß.

Die Absatzmöglichkeit von schwachentwässertem Klärschlamm in der Landwirtschaft ist räumlich und mengenmäßig stark begrenzt und die Akzeptanz schwindet mit der Zunahme der Bedeutung einer biologischen Landwirtschaft. Die Deponierung von Klärschlamm auf Halden wird wegen der hohen Menge an biologischen Bestandteilen zunehmend schwieriger, selbst wenn der Klärschlamm durch mengenvergrößernde Magerungsmittel deponiefähig gemacht wird.

Die Verwendung von Klärschlamm als Brennstoff in Kraftwerken oder anderen Verbrennungsanlagen setzt eine leistungsfähige Trocknung voraus, die in der Regel in einer Trocknungsanlage unter Verbrauch hochwertiger Energieträger oder dem hierfür zu kostbaren Faulgas aus Faultürmen erfolgt. Es fallen meist erhebliche Transportkosten für den Transport des Klärschlamms zu den zentralen Großanlagen an. Zudem muß der Anteil an Klärschlamm aufgrund des schlammspezifischen Brenn- und Ascheverhaltens meist niedrig gehalten werden. Die Abgasreinigung für Brennstoffgemische ist schließlich aufwendiger als für Monobrennstoffe. Aus all diesen Gründen müssen für die Verbrennung von Klärschlamm meist Zuzahlungen geleistet werden.

Auch Vergasungsanlagen für Klärschlamm wurden bisher nur für große Mengen ausgelegt, was wiederum kostenintensive Transporte mit sich bringt, da der dezentral anfallende Klärschlamm nur gering entwässert ist.

Aus der DE-A-40 20 552 ist ein Verfahren zur Verwertung von Klärschlamm bekannt, bei dem der Klärschlamm zunächst vollständig getrocknet wird. In einem anschließenden Entgasungsprozeß bei Temperaturen von 400 °C bis 500 °C unter gleichzeitiger Mahlung wird Klärschlamm-Koks mit 10 bis 40 Gewichts-% organischen Substanzen erzeugt, der als Füller für Asphalt besonders geeignet ist.

In der EP-A-0 166 079 ist ein Verfahren zur thermischen Behandlung von kohlenstoffhaltigen Stoffen, insbesondere von Schlämmen, dargestellt, bei dem mechanisch vorgetrocknete Schlämme direkt mittels Trockengas getrocknet werden, wobei das Trockengas aus einer partiellen Oxidation des direkt getrockneten Schlammes gewonnen wird.

Es ist daher Aufgabe der Erfindung, ein Verfahren und eine Vorrichtung zu entwickeln, mit der Klärschlamm in Anschluß an eine Kläranlage dezentral verarbeitet werden kann und die optimal die im Klärschlamm enthaltene Energie nutzt.

Diese Aufgabe wird erfindungsgemäß durch ein Verfahren gelöst, das durch folgende Verfahrensschritte gekennzeichnet ist:
- entwässerter Klärschlamm wird in einem Wirbelschichttrockner getrocknet, bis ein Wassergehalt von höchstens 10 % erreicht ist;
- der getrocknete Klärschlamm wird in einem Wirbelschichtvergaser unter Sauerstoffmangel vergast, wobei Produktgas entsteht;
- mit dem Produktgas wird ein Blockheizkraftwerk betrieben,
- die Abwärme von Wirbelschichtvergaser und Blockheizkraftwerk wird über geschlossene Rohrsysteme von Wärmetauschern dem Wirbelschichttrockner oder dem Wirbelschichtvergaser zugeführt.

Erfindungsgemäß ist auch ein Verfahren, bei dem der Klärschlamm in einer Hochdruck-Kammerfilterpresse entwässert wird.

Vorteilhaft ist, daß der entwässerte Klärschlamm vor der Trocknung in einem Mischer mit Rücklaufgut aus dem Wirbelschichttrockner vermischt und pelletiert wird.

Es liegt im Rahmen der Erfindung, daß das im Wirbelschichtvergaser enstehende Produktgas durch Kondensation des Wasserdampfes getrocknet wird.

Weiterhin ist vorgesehen, daß das Abgas des Blockheizkraftwerkes über Wärmetauscher geleitet wird.

Es ist auch sinnvoll, daß mit dem aus der Hochdruck-Kammerfilterpresse ablaufenden Filtrat der Wasserdampf aus den Brüden des Wirbelschichttrockners kondensiert wird.

Die erfindungsgemäße Vorrichtung umfaßt einen Wirbelschichttrockner, einen sich daran anschließenden Wirbelschichtvergaser und ein sich an den Wirbelschichtvergaser anschließendes Blockheizkraftwerk.

Eine Weiterbildung der erfindungsgemäßen Vorrichtung besteht darin, daß dem Wirbelschichttrockner eine Entwässerungsvorrichtung vorgeschaltet ist.

Weiterhin ist es zweckmäßig, daß die Entwässerungsvorrichtung eine Hochdruck-Kammerfilterpresse ist.

Schließlich ist es sinnvoll, daß Mittel zum Waschen des Produktgases vorgesehen sind.

Die Erfindung hat zahlreiche Vorteile: Durch die Verarbeitung des Klärschlamms vorzugsweise im Bereich der Kläranlage wird das zu entsorgende Volumen extrem reduziert. Magerungsmittel müssen nicht zugesetzt werden, nur noch Asche verläßt das System.

Zudem enthält die Asche keine organischen Bestandteile mehr, entspricht somit der TA Siedlungsabfall und kann somit deponiert werden. Dies ist auch in seuchenhygienischer Hinsicht von Bedeutung.

Durch die Hochtrocknung der Klärschlammpellets mit der Prozeßeigenwärme und die Stromerzeugung, die (bei Trockenrückstandswerten über 40% im Filterkuchen) bis hin zur Deckung des gesamten Strombedarfs der Kläranlage gehen kann, ist das Verfahren in energetischer Hinsicht optimal. Es kann allein mit nachwachsenden Rohstoffen (Klärschlamm, gegebenenfalls Biodiesel oder andere nachwachsende Brennstoffe) als CO₂-neutrales Verfahren betrieben werden.

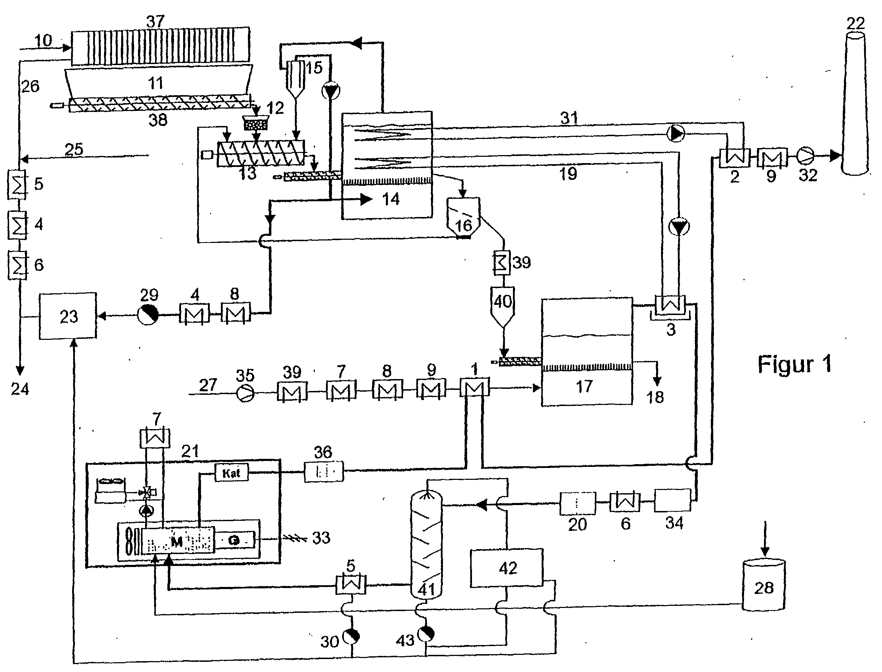

Im folgenden wird eine beispielhafte Ausführung des erfindungsgemäßen Verfahrens und der erfindungsgemäßen Vorrichtung anhand einer Zeichnung detailliert beschrieben. Es zeigt
- Fig. 1: eine schematische Darstellung der erfindungsgemäßen Vorrichtung.

Der aus der Kläranlage kommende Klärschlamm 10 wird über eine Hochdruckpumpe in eine Hochdruck-Kammerfilterpresse 37 gedrückt und dort entwässert. Bei diesem Klärschlamm handelt es sich in der Regel um nur mit Polymeren konditionierten Überschußschlamm mit einem Trockenrückstand (TR) von ca. 2-8 %. In der Hochdruck-Kammerfilterpresse 37 wird der Klärschlamm vorzugsweise auf einen TR-Wert von über 40% entwässert, da bei TR-Werten über 40 % die Anlage energieautark arbeiten kann. Durch die kurzen Entwässerungszeiten und die dabei erreichbaren TR-Werte reichen relativ kleine Hochdruck-Kammerfilterpressen 37, um die anfallenden Schlammengen zu entwässern.

Der Filterkuchen wird in einen Zwischenspeicher 11 geworfen, um den Chargenbetrieb der Hochdruck-Kammerfilterpresse 37 auszugleichen. Über eine Fördereinrichtung 38 und einen Filterkuchenzerkleinerer 12 gelangen die vorklassierten Filterkuchenstücke in den Mischer 13. Dort werden Pellets geformt.

Diese Pellets werden in einem Wirbelschichttrockner 14 gewirbelt und durch über geschlossene Dampfkreisläufe 19, 31 eingebrachte Wärme auf TR Werte über 90 % getrocknet. In einem Sieb 16 wird das Trockengut klassiert, anschließend wird dem Trockengut im Produktkühlerwärmetauscher 39 Wärme entzogen und das Trockengut in einem (z. B. mit N₂) inertisierbaren Trockengutspeicher 40 zwischengelagert.

Über eine weitere Fördereinrichtung werden die Pellets in einen Wirbelschichtvergaser 17 gedrückt und dort unter Sauerstoffmangel die biologischen Anteile (Glühverlust der getrockneten Pellets: ca. 50 %) bei Temperaturen von 850-900 °C vergast. Die Bildung von NO-Verbindungen wird dadurch verhindert. Es kann zusätzlich eine Wasserdampflanze im Wirbelschichtvergaser 17 vorgesehen sein. Die mineralisierte Asche 18 wird mit Transportfahrzeugen abgefahren; sie kann deponiert werden. Aus dem entstehenden Produktgas werden in Filtern 34, 20 die festen Bestandteile abgeschieden und in Produktgas-Dampf-Wärmetauscher 3, Produktgas-Wärmetauscher 6 und Kondensationswärmetauscher 5 die gasförmigen Bestandteile aus dem Produktgas herauskondensiert (z.B. Quecksilber), wobei im Kondensationswärmetauscher 5 das Produktgas durch Kondensation des noch enthaltenen Wasserdampfes getrocknet wird.

Der Produktgas-Dampf-Wärmetauscher 3 und der Produktgas-Wärmetauscher 6 sind durch geeignete Vorrichtungen, z.B. Dampfrußbläser reinigbar, um einen besseren Wärmeübergang zu erzielen und um Ablagerungen und Verkrustungen zu vermeiden. Um eine gleichmäßige Produktgasqualität zu erhalten und zum Druckausgleich wird ein Druckausgleichs-Mischbehälter 41 vor dem Kondensationswärmetauscher 5 installiert. Der Druckausgleichs-Mischbehälter 41 wird bedarfsweise auch als Waschkolonne für das Produktgas eingesetzt. Die im Druckausgleichs-Mischbehälter 41 eventuell anfallenden Flüssigkeiten werden über einen Kondensomaten 43 in die Reinigungsanlage 42 geleitet und gereinigt.

Das Produktgas wird in einem Blockheizkraftwerk 21, bestehend aus einem Motor M und einem Generator G zur Stromerzeugung, verbrannt, wobei die Abwärme des Motors im Normalbetrieb über einen Motorkühlwasserwärmetauscher 7 übertragen wird.

Die Abgase des Motors werden über einen Katalysator Kat, erforderlichenfalls über einen zusätzlichen oxydierenden Katalysator 36, einen Abgas-Zuluft-Wärmetauscher 1, einen Dampf-Abgas-Wärmetauscher 2, einen weiteren Abgas-Wärmetauscher 9 und einen Abgasventilator 32 zu einem Kamin 22 geleitet.

Das aus der Hochdruck-Kammerfilterpresse 37 ablaufende Filtrat 26 und während der Entladezeit der Hochdruck-Kammerfilterpresse 37 auch das Brauchwasser 25 dienen zum Kondensieren in den Kondensationswärmetauschern 4 und 5. Die Kondensomaten 29, 30, 43 verhindern, daß Dämpfe oder Gase das System verlassen können.

Dem in dem Wirbelschichttrockner 14 bei der Trocknung freigesetzten leicht überhitzten Wasserdampf werden in einem Dampftuchfilter 15 die festen Partikel und in einem Kondensationswärmetauscher 4 sowie einem Vorkühler Trocknungsbrüden 8 die Wärme entzogen. Das ablaufende Kondensat wird über den Kondensomaten 29 in den Filtratablauf 24 zur Kläranlage zurückgeleitet, wobei Begleitstoffe bedarfsweise in einer Behandlungsanlage 23 ausgefällt und/oder abgebaut werden.

Das Rücklaufgut aus dem Sieb 16 und dem Dampftuchfilter 15 wird im Mischer 13 den Filterkuchenstücken zugemischt und mitpelletiert. Durch den Einsatz des Rücklaufgutes können Trockensubstanz-Schwankungen im Filterkuchen bei der Entwässerung ausgeglichen werden.

Das Kondenswasser aus dem Kühler 5 wird über den Kondensomaten 30 ebenfalls in den Filtratablauf zur Kläranlage zurückgeleitet, wobei Begleitstoffe bedarfsweise in der Reinigungsanlage 23 ausgefällt und/oder abgebaut werden..

Die Zuluft 27 zum Wirbelschichtvergaser 17 wird über ein Zuluftgebläse 35 über Produktkühlerwärmetauscher 39, Produktgaswärmetauscher 6, den bereits erwähnten Motorkühlwasserwärmetauscher 7, Vorkühler Trocknungsbrüden 8 und Motorabgaswärmetauscher 9 geführt, wobei je nach Anlage alle diese Wärmetauscher 39, 6, 7, 8, 9 oder nur einzelne bzw. keine vorliegen. Zweckmäßig ist zumindest das Vorliegen eines Abgas-Zuluft-Wärmetauschers 1. Die Zulufttemperatur kann durch diese Maßnahmen aufüber 500 °C erhitzt werden, was wiederum den thermischen Wirkungsgrad der Vorrichtung erhöht und die Gasqualität des Produktgases entscheidend verbessert.
Der Wirbelschichttrockner 14 ist über geschlossene Dampfheizkreisläufe 19, 31 mit dem Produktgas-Dampf-Wärmetauscher 3 und dem Dampf-Abgas-Wärmetauscher 2 verbunden. Mit den Abwärmen, die normalerweise zur Erwärmung der Zuluft 27 dienen, kann auch durch Beschlagen des Mischers 13 das Mischgut vorgewärmt werden oder Nahwärme ausgekoppelt werden

Die Hilfsenergie für das Blockheizkraftwerk 21, insbesondere beim Anfahren, wird einem dezentralen Energiespeicher 28 entnommen, der vorzugsweise mit nachwachsenden Energieträgern wie Biodiesel gefüllt ist.

Wie bereits ausgeführt, arbeitet die Vorrichtung bei TR-Werten über 40 % im entwässerten Klärschlamm energieautark, d.h., daß Strom zum Betrieb der Kläranlage und/oder Heizwärme abgegeben werden kann.

In Verbindung mit bereits eingeführten neueren Verfahren für die Biologie der Kläranlage, bei denen der Kohlenstoff im Klärschlamm gehalten wird, anstatt bereits in den Belüftungsbecken in die Luft geblasen zu werden, eröffnet die Erfindung die Möglichkeit, die Energieausbeute aus dem Klärschlamm noch erheblich zu steigern.

## Patentansprüche

1. Verfahren zum Verarbeiten von biologischen Reststoffen, insbesondere von Klärschlamm, gekennzeichnet durch folgende Verfahrensschritte:
• entwässerter Klärschlamm wird in einem Wirbelschichttrockner getrocknet, bis ein Wassergehalt von höchstens 10 % erreicht ist;
• der getrocknete Klärschlamm wird in einem Wirbelschichtvergaser unter Sauerstoffmangel vergast, wobei Produktgas entsteht;
• mit dem Produktgas wird ein Blockheizkraftwerk betrieben,
• die Abwärme von Wirbelschichtvergaser und Blockheizkraftwerk wird über geschlossene Rohrsysteme von Wärmetauschern dem Wirbelschichttrockner oder dem Wirbelschichtvergaser zugeführt.

2. Verfahren gemäß Anspruch 1, dadurch gekennzeichnet, daß der Klärschlamm in einer Hochdruck-Kammerfilterpresse entwässert wird.

3. Verfahren gemäß Anspruch 1 oder Anspruch 2, dadurch gekennzeichnet, daß der entwässerte Klärschlamm vor der Trocknung in einem Mischer mit Rücklaufgut aus dem Wirbelschichttrockner vermischt und pelletiert wird.

4. Verfahren gemäß Anspruch 1, dadurch gekennzeichnet, daß das im Wirbelschichtvergaser enstehende Produktgas durch Kondensation des Wasserdampfes getrocknet wird.

5. Verfahren gemäß Anspruch 1, dadurch gekennzeichnet, daß das Abgas des Blockheizkraftwerkes über Wärmetauscher geleitet wird.

6. Verfahren gemäß Anspruch 2, dadurch gekennzeichnet, daß mit dem aus der Hochdruck-Kammerfilterpresse ablaufenden Filtrat der Wasserdampf aus den Brüden des Wirbelschichttrockners kondensiert wird.

7. Vorrichtung zum Durchführen des Verfahrens gemäß der Ansprüche 1 bis 5, dadurch gekennzeichnet, daß die Vorrichtung einen Wirbelschichttrockner, einen sich daran anschließenden Wirbelschichtvergaser und ein sich an den Wirbelschichtvergaser anschließendes Blockheizkraftwerk umfaßt.

8. Vorrichtung gemäß Anspruch 7, dadurch gekennzeichnet, daß dem Wirbelschichttrockner eine Entwässerungsvorrichtung vorgeschaltet ist.

9. Vorrichtung gemäß Anspruch 8, dadurch gekennzeichnet, daß die Entwässerungsvorrichtung eine Hochdruck-Kammerfilterpresse ist.

10. Vorrichtung gemäß Anspruch 9, dadurch gekennzeichnet, daß Mittel zum Waschen des Produktgases vorgesehen sind.

## Claims

1. Process for treating biologic residues particularly such as sewage sludge which process is
characterized by the following steps :
- dewatered sewage sludge is dried down in a fluidized bed drier to a maximum water content of 10 %,
- the dried sewage sludge is gasified in a fluidized bed gasifier operated at reduced oxygen level (excess air level index n < 1.0) generating a product gas,
- the product gas is utilized to fuel a cogenerating power block unit,
- waste heat from the fluidized bed drier and from the cogenerating power block is recycled to the drier and gasifier by means of a closed loop system formed by tubes and heat exchangers.

2. Process of claim 1 being further characterized by using an high pressure chamber filter press for dewatering the sewage sludge.

3. Process of claim 1 or claim 2 being further characterized by blending the dewatered sewage sludge in a mixer with already dried recycle product prior to feeding to the fluidized bed drier and pelletizing this mixture.

4. Process of claim 1 being further characterized by drying the product gas from the fluidized bed gasifier by means of steam condensation.

5. Process of claim 1 being further characterized by recovering waste heat from the off-gas of the cogenerating power block unit.

6. Process of claim 2 being further characterized by utilizing the filtrate from the high pressure chamber filter press to condense the saturated off-steam from the fluidized bed drier.

7. Device for performing the process as claimed in claims 1 to 5 characterized by the sequence of a fluidized bed drier followed by a fluidized bed gasifier and of a cogenerating power block unit.

8. Device of claim 7 being further characterized by a dewatering device provided ahead of the fluidized bed drier.

9. Device of claim 8 being further characterized by employing a high pressure chamber filter press as dewatering device.

10. Device of claim 9 being further characterized by means for washing of the product gas.

## Revendications

1. Procédé de traitement de résidus biologiques, en particulier de boues de curage, caractérisé par les étapes suivantes :
- des boues de curage asséchées sont séchées dans un séchoir tourbillonaire à fluidisation, jusqu'à ce que la teneur en eau soit inférieure à 10%;
- ces boues séchées sont gazéifiées dans un gazéificateur à couche fluidisée en absence d'oxygène en générant un gaz;
- le gaz généré alimente un bloc de chauffage;
- la chaleur émise par le gazéificateur à couche fluidisée et par le bloc de chauffage est transmise par des conduites fermées d'échangeurs de chaleur au séchoir tourbillonaire à fluidisation ou au gazéificateur à couche fluidisée.

2. Procédé selon la revendication 1, caractérisé en ce que les boues de curage sont asséchées dans un filtre-presse à chambre à haute pression.

3. Procédé selon la revendication 1 ou 2, caractérisé en ce que les boues asséchées sont mélangées avant le séchage dans un mélangeur avec le reflux du séchoir tourbillonaire à fluidisation avant d'être agglomérées.

4. Procédé selon la revendication 1, caractérisé en ce que le gaz généré dans le gazéificateur à couche fluidisée est séché par condensation de la vapeur d'eau.

5. Procédé selon la revendication 1, caractérisé en ce que les gaz d'échappement du bloc de chauffage passent sur des échangeurs de chaleur.

6. Procédé selon la revendication 2, caractérisé en ce que la vapeur d'eau issue des buées du séchoir tourbillonaire à fluidisation est condensée avec le filtrat du filtre-presse à chambre à haute pression.

7. Dispositif pour la mise en oeuvre du procédé selon l'une des revendications 1 à 5, caractérisé en ce que le dispositif comprend un séchoir tourbillonaire à fluidisation suivi d'un gazéificateur à couche fluidisée auquel se rattache un bloc de chauffage.

8. Dispositif selon la revendication 7, caractérisé en ce que séchoir tourbillonaire à fluidisation est précédé d'une installation d'assèchement.

9. Dispositif selon la revendication 8, caractérisé en ce que l'installation d'assèchement est un filtre-presse à chambre à haute pression.

10. Dispositif selon la revendication 9, caractérisé en ce que des moyens pour le nettoyage du gaz généré sont prévus.
